# EUROPÄISCHE PATENTSCHRIFT

(11) **EP 2 218 535 B1**
(45) Veröffentlichungstag und Bekanntmachung des Hinweises auf die Patenterteilung: **26.04.2017**
(21) Anmeldenummer: 10001416.6
(22) Anmeldetag: 11.02.2010
(51) Int. Cl.: B23D 65/00, B23K 9/04, B23K 10/02, B22D 19/06

(54) **Vorrichtung zum Stellitieren von Sägezähnen und Verfahren hierfür**
Device for stelliting saw teeth and method for same
Dispositif de stellitage des dents de scie et procédé correspondant

(30) Priorität: 16.02.2009 DE 102009009179
(43) Veröffentlichungstag der Anmeldung: 18.08.2010
(73) Patentinhaber: VOLLMER WERKE Maschinenfabrik GmbH, 88400 Biberach/Riss (DE)
(72) Erfinder: Reichenzer, Werner, 88447 Warthausen/Röhrwangen (DE); Hutzel, Edgar, 88444 Ummendorf (DE)
(74) Vertreter: Thum, Bernhard

(56) Entgegenhaltungen:
- DE-A1- 4 124 745
- DE-C1- 4 314 707
- JP-B- 7 010 433
- JP-U- 62 007 325

## Beschreibung

Die vorliegende Erfindung betrifft eine Vorrichtung zum Stellitieren von Sägezähnen nach dem Oberbegriff des Anspruchs 1 und ein Verfahren zum Stellitieren von Sägezähnen mit einer solchen Vorrichtung. Eine solche Vorrichtung und ein solches Verfahren ist der JP 62 007325 U zu entnehmen. Mit einer derartigen Stellitiervorrichtung werden die Sägezähne von beispielsweise Bandsägeblättern, Kreissägeblättern und Gattersägeblättern mit einem Hartstoff, vorzugsweise Stellit, bestückt.

Um einen Sägezahn mit einem Stellitschneidstoff versehen zu können, wird das Stellit als Zusatzstoff in Form von Stäben oder Drähten mit verschiedenen Durchmessern zugeführt und an einer Abschmelzstelle durch einen Schweißbrenner, insbesondere einen Plasmaschweißbrenner, abgeschmolzen. Das verflüssigte Stellit dringt dabei schwerkraftbedingt in eine Formbackenanordnung, die in geschlossenem Zustand den zu stellitierenden Sägezahn umgibt und an diesem Sägezahn einen aufzufüllenden Hohlraum bildet. Nach dem Erstarren des Stellits wird die Formbackenanordnung geöffnet, wobei der mit einer Stellitschneide versehene Sägezahn ausgeformt wird, und der nächste Sägezahn kann entsprechend bearbeitet werden.

Die Positionierung und der Transport des das Stellit enthaltenden Drahts erfolgt durch eine Drahtzuführeinrichtung. Der Schweißdraht bzw. Stellitdraht muss jedoch sehr präzise - innerhalb einer Toleranz von 0,1 mm - der Abschmelzstelle und somit dem Schweißbrenner zugeführt werden. Diese präzise Zuführung ist notwendig, um bei Sägezähnen, insbesondere bei kleinen Sägezähnen, ein definiertes Volumen von Stellit lunkerfrei durch die Schwerkraft in den Hohlraum, in der Formbackenanordnung einbringen zu können.

Diese hohe Präzision ist in der Praxis mit herkömmlichen Vorrichtungen nur schwer zu erreichen, da der zu positionierende Stellitdraht nur im Rahmen eines vorgegebenen Fertigungstoleranzbandes hergestellt werden kann. Die Fertigungstoleranzen legen den Durchmesser und die Form des Drahts über die gesamte Länge des Drahts bzw. Stabs nur grob fest. Mit anderen Worten kann der Durchmesser und die Form des Drahts oder Stabs innerhalb der vorgegebenen Fertigungstoleranzen variieren. Ferner werden Drähte und Stäbe häufig von den Herstellern aufgewickelt auf Bevorratungsrollen angeliefert. Durch das Aufwickeln der Drähte auf Rollen bzw. Spulen weisen die Drähte für die spätere Bearbeitung - hier das Stellitieren - eine unerwünschte Verformung auf. Der Draht wird durch das Aufwickeln sozusagen "verbogen" und verläuft nach dem Abwickeln nicht richtungstreu. Die toleranzbedingten Abweichungen in der Form und der Durchmesser des Drahts sowie die Verformungen, die durch das Auf- bzw. Abwickeln des Drahts auf Rollen entstehen, machen eine hochgenaue Zuführung des Drahtes zu der vorbestimmten Abschmelzstelle bei einer Vielzahl von aufeinander folgenden Stelltiervorgängen nahezu unmöglich. Daher ist es eine Aufgabe der vorliegenden Erfindung eine Vorrichtung der eingangs bezeichneten Art bereitzustellen, die ein Stellitieren von Sägezähnen mit einer reproduzierbar hohen Präzision ermöglicht.

Diese Aufgabe wird gelöst durch eine Vorrichtung mit den Merkmalen des Anspruchs 1. Der Schweißdraht bzw. der Stellitdraht wird durch die erfindungsgemäße Vorrichtung auf eine vorbestimmte Art deformiert, wodurch toleranzbedingte Schwankungen der Form und des Durchmessers des Schweißdrahts und lieferbedingte Verformungen ausgeglichen werden und der Schweißdraht mit einer hohen Präzision - innerhalb eines Toleranzfeldes von 0,1 mm - dem vorbestimmten Abschmelzpunkt an dem Schweißbrenner bzw. der Formbackenanordnung zugeführt werden kann. Die präzise Zuführung des Schweißdrahtes bzw. Stellitdrahts zu dem vorbestimmten Abschmelzpunkt ist notwendig, um einen absolut gleichmäßigen und lunkerfreien Füllungsgrad des von der Formbackenanordnung gebildeten Hohlraums am jeweils mit einer Stellitschneide zu bestückenden Zahn eines Werkstücks zu erreichen. Die Vorrichtung zum Stellitieren versucht nicht, die von dem Abwickelvorgang von einer Bevorratungsrolle herührenden Verformungen in einer bestimmten Richtung auszugleichen, sondern deformiert den Draht gezielt auf eine vorbestimmte Art, die eine präzise Zuführung bei den sich wiederholenden Stelltiervorgängen zu dem vorbestimmten Abschmelzpunkt möglich macht. Die Erfindung sieht vor, dass die Richtrollenanordnung in Drahtzuführrichtung betrachtet vor der Drahtzuführeinrichtung angeordnet ist. Mit anderen Worten läuft der Schweißdraht zuerst durch die Richtrollenanordnung, um vorbestimmt deformiert zu werden, und anschließend in die ihn antreibende Drahtzuführeinrichtung.

Um eine möglichst hohe reproduzierbare Präzision bei der Zuführung des Schweißdrahtes zu dem vorbestimmten Abschmelzpunkt zu erhalten, wird der Schweißdraht mit einer vorbestimmten Deformation mittels einer Schweißdrahtzuführhülse dem vorbestimmten Abschmelzpunkt zugeführt. Um die präzise Zuführung des Schweißdrahtes sicherzustellen, ist die Schweißdrahtzuführhülse derart geformt oder angeordnet, dass sie eine Führung für den in vorbestimmter Weise deformierten Schweißdraht in Richtung des vorbestimmten Abschmelzpunktes bildet.

Zur Änderung der Deformationsart oder des Deformationsgrads des Schweißdrahts oder zur Anpassung an verschiedene Durchmesser des Schweißdrahts ist gemäß der Erfindung vorgesehen, dass die zumindest eine Richtrolle der Richtrollenanordnung in vertikaler Richtung verlagerbar ist. Durch den Einsatz einer verlagerbaren Richtrolle kann die Stellitiervorrichtung einfach auf verschiedene Durchmesser von Stellitdrähten eingestellt und auch der Deformationsgrad, d.h. das Ausmaß der Deformation des Drahtes, an verschiedene Stellitdrähte angepasst werden.

Um die Stellitiervorrichtung möglichst flexibel an verschiedene Sägeblättertypen, wie zum Beispiel von Gattersägen, Bandsägen und Kreissägen, und an verschiedene Stellitdrähte anpassen zu können, sieht eine bevorzugte Ausführungsform der Erfindung vor, dass die Drahtzuführeinrichtung relativ zu dem vorbestimmten Abschmelzpunkt verlagerbar ist. In diesem Zusammenhang ist zu erwähnen, dass gemäß einer Weiterbildung der Erfindung die Drahtzuführeinrichtung in vertikaler und in horizontaler Richtung relativ zu dem Abschmelzpunkt verlagerbar ist. Dies ist gerade bei Maschinen bevorzugt, bei denen eine Stellitiervorrrichtung und eine andere Bearbeitungsvorrichtung, wie zum Beispiel eine Anlassvorrichtung, miteinander kombiniert zum Einsatz kommen und die Stellitiervorrichtung zum Einstellen oder Wegbewegen nach dem Stellitieren verlagert werden muss.

Zum Stellitieren von verschiedenartig ausgebildeten Sägezähnen bzw. von Sägezähnen verschiedener Sägeblättertypen werden jeweils verschiedenartige Formbackenanordnungen verwendet, die eine der Form des zu stellitierenden Sägezahns entsprechende Negativform an diesem Sägezahn bilden. In die Negativform bzw. den Hohlraum wird anschließend das geschmolzene Stellit eingebracht. Aus diesem Grund sieht eine Weiterbildung der Erfindung vor, dass die Formbackenanordnung im geschlossenem Zustand den zu stellitierenden Sägezahn umschließt und an einer dem Schweißbrenner zugewandten Fläche eine Öffnung bildet, durch die das abgeschmolzene Material in den Hohlraum in der Formbackenanordnung einbringbar ist.

Da die Öffnung zu dem Hohlraum in der Formbackenanordnung, durch die das geschmolzene Stellit in den Hohlraum eindringt, bevorzugt mittig auf der dem Schweißbrenner zugewandten Fläche der Formbackenanordnung vorgesehen ist, ist gemäß einer Weiterbildung der Erfindung der vorbestimmte Abschmelzpunkt der Flächenmittelpunkt der dem Schweißbrenner zugewandten Fläche der geschlossenen Formbackenanordnung.

Damit der Schweißdraht auch während des Stellitierens exakt den vorbestimmten Abschmelzpunkt erreicht, ist gemäß einer bevorzugten Ausführungsform der Erfindung die Geschwindigkeit des Vorschubs des Schweißdrahts durch die Drahtzuführeinrichtung steuerbar. Mit anderen Worten muss der Schweißdraht entsprechend dem durch den Schweißbrenner abgeschmolzenen Volumen nachgeführt werden, um bei einem neuen Stellitiervorgang wieder den vorbestimmten Abschmelzpunkt zu erreichen. Dem ist hinzuzufügen, dass die Drahtzuführeinrichtung zumindest ein gegenüberliegendes Rollenpaar aufweist, durch das der Schweißdraht hindurch führbar ist und durch das er angetrieben wird.

Die vorliegende Erfindung betrifft ferner ein Verfahren zum Stellitieren von Sägezähnen mit einer Vorrichtung der voranstehend beschriebenen Art, wobei der Schweißdraht durch eine Richtrollenanordnung vorbestimmt deformiert wird, und mit einer vorbestimmten Deformation mittels eine Drahtzuführeinrichtung und einer Schweißdrahtzuführhülse einem vorbestimmten Abschmelzpunkt zugeführt wird, und wobei der Schweißdraht an dem vorbestimmten Abschmelzpunkt mittels des Schweißbrenners abgeschmolzen wird und die Schmelze durch eine Öffnung an der dem Schweißbrenner zugewandten Fläche in einen von der Formbackenanordnung im geschlossenen Zustand gebildeten Hohlraum eindringen kann.

Die vorliegende Erfindung betrifft ferner eine Maschine zur Bearbeitung von Sägeblättern mit einer Vorrichtung der voranstehend beschriebenen Art.

Die Erfindung wird im folgenden beispielhaft anhand der beiliegenden Figuren erläutert. Es stellen dar:
- Figur 1: eine perspektivische Ansicht der Stellitiervorrichtung gemäß der Erfindung;
- Figur 2: eine perspektivische, vergrößerte Ansicht des Ausschnitts I aus Figur 1;
- Figur 3: eine vergrößerte Schnittansicht des Ausschnitts I aus Figur 1;
- Figur 4: eine Vorderansicht der Stellitiervorrichtung gemäß der Erfindung;
- Figur 5: eine Draufsicht der Stellitiervorrichtung gemäß der Erfindung;
- Figur 6: eine Ansicht des vergrößerten Ausschnitts Va aus Figur 5;
- Figur 7: eine Ansicht des vergrößerten Ausschnitts Vb aus Figur 5;
- Figur 8: eine perspektivische Ansicht einer Maschine zum Bearbeiten von Sägezähnen mit einer Stellitiervorrichtung gemäß der Erfindung während des Stellitierens;
- Figur 9: eine perspektivische Ansicht einer Maschine zum Bearbeiten von Sägezähnen mit einer Stellitiervorrichtung gemäß der Erfindung während des Anlassens; und
- Figur 10: eine Vorderansicht einer Maschine zum Bearbeiten von Sägezähnen.

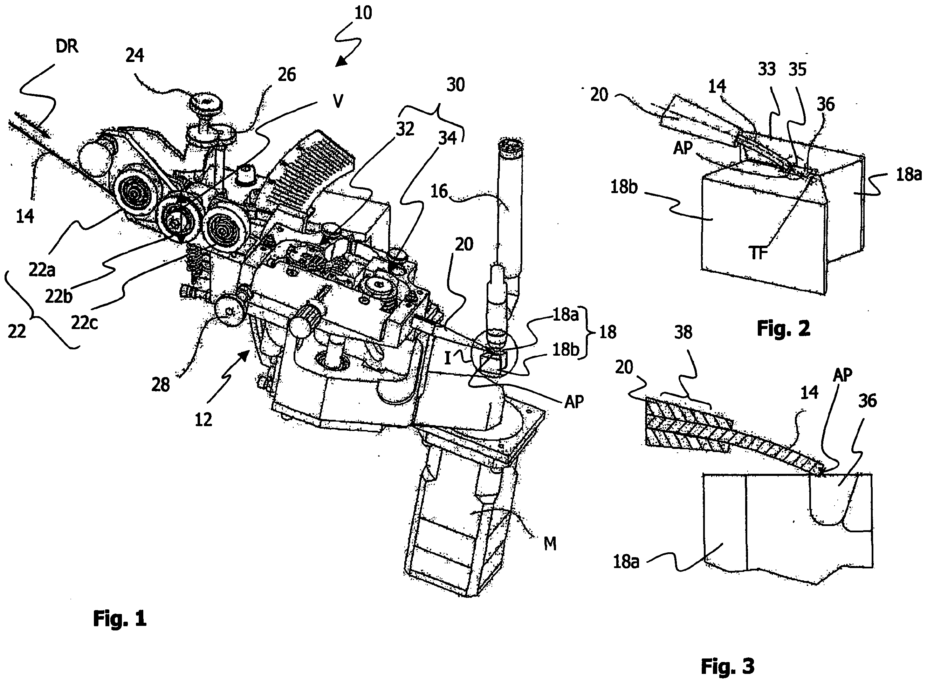

Figur 1 zeigt eine perspektivische Ansicht einer Vorrichtung zum Stellitieren von Sägezähnen, die allgemein mit 10 bezeichnet ist. Die Stellitiervorrichtung 10 umfasst eine Drahtzuführvorrichtung 12 zum Zuführen des Schweißdrahts 14 zu einem Schweißbrenner 16. Der Schweißbrenner 16 ist oberhalb einer Formbackenanordnung 18 angeordnet, die zwei Formbacken 18a und 18b aufweist. Auf die Formbackenanordnung 18 wird im weiteren Verlauf dieser Beschreibung mit Bezug auf Figur 2 und 3 detailliert eingegangen. Der Schweißbrenner 16 bringt den Stellitdraht bzw.

Schweißdraht 14 zum Schmelzen und das geschmolzene Stellit dringt anschließend schwerkraftbedingt in einen hier nicht gezeigten Hohlraum in der Formbackenanordnung 18 ein.

Man erkennt ferner in Figur 1, dass an einer Drahtzuführeinrichtung 12 eine Schweißdrahtzuführhülse 20 vorgesehen ist, die den Schweißdraht 14 zu einem vorbestimmten Abschmelzpunkt AP zuführt.

Entgegen der Drahtzuführrichtung DR, in der der Schweißdraht 14 dem Schweißbrenner 16 zugeführt wird, ist der Drahtzuführeinrichtung 12 eine Richtrollenanordnung 22 vorgeschaltet. Die Richtrollenanordnung 22 weist drei Richtrollen 22a, 22b, 22c auf, um die der Schweißdraht 14 herum geführt ist. Die mittlere Richtrolle 22b der Richtrollenanordnung 22 ist in vertikaler Richtung verlagerbar, wie durch den Doppelpfeil V angedeutet, wodurch die Deformation des Schweißdrahts 14 beeinflusst werden kann. Mit anderen Worten wird der Schweißdraht 14 durch die Richtrollenanordnung 22 und hier insbesondere durch die Richtrolle 22b vorbestimmt deformiert und anschließend der Drahtzuführrichtung 12 zugeleitet. Die Richtrolle 22b kann durch die Stellschraube 24 vertikal verlagert werden, wodurch der Deformationsgrad des Schweißdrahts beeinflusst oder die Richtrollenanordnung 22 auf unterschiedliche Durchmesser des Schweißdrahts 14 eingestellt werden kann.

In Figur 1 erkennt man ferner Stellschrauben 26 und 28, durch die die Stellitiervorrichtung 10 horizontal und vertikal verlagert werden kann. Zur Bearbeitung unterschiedlicher Sägeblätter, wie z.B. Kreissägeblätter, Gattersägeblätter und Bandsägeblätter, kann es notwendig sein, die Stellitiervorrichtung 10 relativ zu einem vorbestimmten Abschmelzpunkt zu verlagern. Mit der Stellschraube 28 ist es möglich, die Position der Drahtzuführeinrichtung 12 derart einzustellen, dass die Drahtzuführeinrichtung 12 immer auf einen Flächenmittelpunkt einer der Schweißdrahtzuführhülse 20 zugewandten Fläche 33 der Formbackenanordnung gerichtet ist (Fig. 2), der bevorzugt mit einem vorbestimmten Abschmelzpunkt übereinstimmt.

Die hier gezeigten Stellschrauben 24, 26, 28 zum Verlagern der Richtrolle 22b bzw. zum Verlagern der Stellitiervorrichtung 10 können selbstverständlich durch Motoren ersetzt werden, die beispielsweise durch eine CNC-Steuerung angesteuert werden können. Die Erfindung ist daher nicht auf die Nutzung von Stellschrauben zur Verlagerung der verschiedenen Komponenten beschränkt.

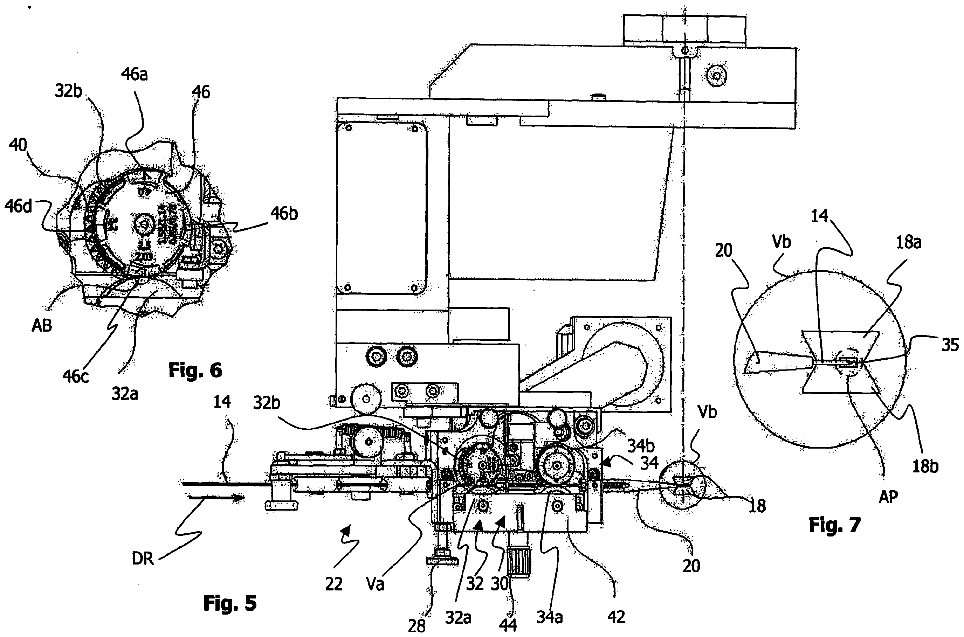

Um dem Schweißbrenner 16 bzw. dem vorbestimmten Abschmelzpunkt zugeführt zu werden, wird der Schweißdraht 14 durch die Drahtzuführeinrichtung 12 angetrieben. Die Drahtzuführeinrichtung 12 sieht dazu eine Rollenanordnung 30 vor, die von zwei Rollenpaaren 32 und 34 gebildet wird. Die Rollen eines Rollenpaares 32 und 34 sind antriebsmäßig miteinander gekoppelt und werden durch einen Motor M beispielsweise über ein Getriebe angetrieben. Der Schweißdraht 14 wird durch Rollenpaare 32 und 34 hindurchgeführt und angetrieben. In Figur 1 ist jeweils nur eine Rolle der Rollenpaare 32 und 34 vollständig gezeigt. Auf die Drahtzuführeinrichtung 12 wird jedoch mit Bezug auf Figur 5 detailliert eingegangen.

Wie bereits mehrfach erwähnt, wird der Schweißdraht 14 durch die Richtrollenanordnung 22 vorbestimmt deformiert und mit dieser vorbestimmten Deformation mittels der Schweißdrahtzuführhülse 20 einem vorbestimmten Abschmelzpunkt AP (Fig. 2) zugeführt.

Figur 2 zeigt eine vergrößerte perspektivische Darstellung des Ausschnitts I aus Figur 1. Man erkennt die Formbackenanordnung 18 mit zwei Formbacken 18a und 18b. Im geschlossenen Zustand bildet die Formbackenanordnung 18 an einer der Schweißdrahtzuführhülse 20 zugewandten Fläche 33 eine Öffnung 35, die in einen in Figur 2 angedeuteten Hohlraum 36 in der Formbackenanordnung 18 mündet.

In Figur 2 erkennt man zudem die Schweißdrahtzuführhülse 20, die den Schweißdraht 14 mit der vorbestimmten Deformation, hier einer Krümmung, zu dem in Figur 2 durch einen Kreis angedeuteten Abschmelzpunkt AP führt. Durch die Deformation des Schweißdrahts 14 werden toleranzbedingte Schwankungen der Form und des Durchmessers des Drahtes sowie lieferbedingte Verformungen ausgeglichen und somit sichergestellt, dass der Schweißdraht 14 bei mehreren aufeinander folgenden Stellitiervorgängen innerhalb der Toleranz den vorbestimmten Abschmelzpunkt AP trifft. In Figur 2 ist zudem schematisch dargestellt mit welch hoher Präzision, nämlich innerhalb eines Toleranzfeldes TF von 0,1 mm, der Schweißdraht 14 den Abschmelzpunkt AP treffen muss. Diese Präzision ist notwendig, um das durch den Schweißbrenner 16 geschmolzene Stellit exakt portioniert, d.h. ein vorbestimmtes Volumen, gleichmäßig und lunkerfrei in dem in der Formbackenanordnung 18 gebildeten Hohlraum 36 durch die Schwerkraft "eintropfen" zu lassen.

Figur 3 zeigt eine vergrößerte Schnittansicht des Ausschnitts I aus Figur 1. Man erkennt wiederum die Schweißdrahtzuführhülse 20, die den Schweißdraht 14 mit einer vorbestimmten Deformation zu der Formbackenanordnung 18 (hier nur der Formbacken 18a gezeigt) zuführt. Aus Figur 3 erkennt man, dass es sich bei der Deformation des Schweißdrahts 14 bevorzugt um eine Krümmung "nach unten" handelt. Mit dieser Krümmung legt sich der Schweißdraht 14 in einem Anlagebereich 38 an die Schweißdrahtzuführhülse 20 an. Durch die Anlage an der Schweißdrahtzuführhülse 20 wird der Schweißdraht 14 definiert an der Hülse 20 abgelenkt und dem vorbestimmten Abschmelzpunkt AP zugeführt. Mit anderen Worten bildet der Anlagebereich 38 in der Schweißdrahtzuführhülse 20 eine Art "Führung" für den Schweißdraht 14, die eine Ansteuerung des vorbestimmten Abschmelzpunkts AP mit einer reproduzierbar hohen Präzision ermöglicht. In Figur 3 erkennt man ferner, einen Ausschnitt des Hohlraums 36 in der Formbacke 18a. Die Formbackenanordnung 18 umschließt im geschlossenen Zustand den zu stellitierenden Sägezahn und bildet den Hohlraum 36, in den das geschmolzene Stellit eindringen und sich mit dem Sägezahn verbinden kann.

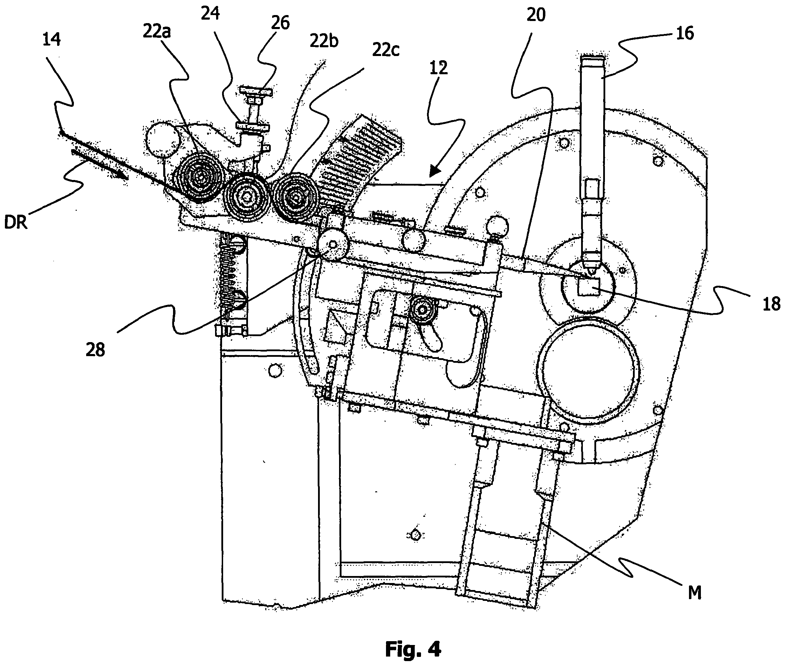

Figur 4 zeigt eine Vorderansicht der Stellitiervorrichtung 10. Aus Figur 4 erkennt man deutlich wie der Schweißdraht 14 durch die Richtrollenanordnung 22 umgelenkt und deformiert wird. Nach der Deformation durch die Richtrollen 22a, 22b, 22c der Richtrollenanordnung 22 wird der durch die Drahtzuführeinrichtung 12 angetriebene Schweißdraht 14 mittels der Schweißdrahtzuführhülse 20 einem vorbestimmten Abschmelzpunkt AP zugeführt, an dem ein vorbestimmtes Volumen durch den Schweißbrenner 16 von ihm abgeschmolzen wird. Das abgeschmolzene Stellit dringt in die Formbackenanordnung 18 ein und verbindet sich dort mit dem von der Formbackenanordnung 18 umschlossenen Bereich der Zahnspitze eines Sägezahns eines Sägeblatts.

Figur 5 zeigt eine Draufsicht der Stellitiervorrichtung 10. Aus Figur 5 wird wiederum ersichtlich, wie der Schweißdraht 14 von einer hier nicht gezeigten Bevorratungsrolle in der Drahtzuführrichtung DR der Richtrollenanordnung 22 zugeführt wird und durch diese vorbestimmt deformiert wird. Nach der Richtrollenanordnung 22 folgt die den Schweißdraht 14 antreibende Drahtzuführeinrichtung 12. Die Drahtzuführeinrichtung 12 weist, wie bereits erwähnt, eine Rollenanordnung 30 mit zwei Rollenpaaren 32 und 34 auf. Die Rollen 32a, 32b und 34a, 34b der Rollenpaare 32, 34 sind antriebsmäßig über Zahnradscheiben 40 (in Fig. 6 ersichtlich) miteinander gekoppelt. Die Rollen 32a und 34a sind an einem Ausgleichelement 42 angeordnet, das federnd gelagert ist und die Rollen 32a, 34a in Richtung der Rollen 32b, 34b vorspannt. Die Vorspannkraft, mit der das Ausgleichelement 42 die Rollen 32a, 34a gegen die Rollen 32b, 34b vorspannt, kann über eine Stellschraube 44 eingestellt und somit an verschiedene Durchmesser von Stellitdrähten 14 angepasst werden. An der Rolle 32b ist eine Anschlaganordnung 46 vorgesehen, auf die mit Bezug auf Figur 6 näher eingegangen wird. Die Rolle 32a stützt sich an der Anschlaganordnung 46 ab, wodurch verhindert wird, dass sich die Rollen 32a und 32b aneinander anlegen und der Draht 14 nicht mehr durch diese hindurch bewegt werden kann.

Figur 6 zeigt eine vergrößerte Ansicht des Ausschnitts Va aus Figur 5. In Figur 6 erkennt man die Anschlaganordnung 46, die auf der Rolle 32b angeordnet ist. Ferner ist in Figur 6 deutlich ersichtlich, dass unterhalb der Rolle 32b eine Zahnradscheibe 40 vorgesehen ist, durch die die beiden Rollen 32a und 32b antriebsmäßig gekoppelt sind und an dem Schweißdraht 14 zum Vorschub angreifen.

Aus Figur 6 wird zudem deutlich, wie sich die Rolle 32a an der Abstützstelle AB an der Anschlaganordnung 46 abstützt. Da beim Stellitieren von Sägezähnen ein exakt definiertes Materialvolumen in den von den Formbacken 18a und 18b gebildeten Hohlraum 36 eingefüllt werden soll, wird der Schweißdraht 14 nach dem Abschmelzen immer in eine vorher definierte Ausgangsposition zurückgefahren. Ist ein Drahtende des Schweißdrahtes 14 bereits über das Rollenpaar 32 mit den Rollen 32a, 32b hinaus nach vorne in Richtung der Schweißdrahtzuführhülse 20 gefördert worden, würde sich die Rolle 32a ohne Anschlaganordnung 46 aufgrund der Vorspannung durch das Ausgleichelement 42 an die Rolle 32b anlegen. Der Draht 14 könnte nicht in seine vordefinierte Ausgangsposition zurückgefahren werden. Der Schweißdraht 14 könnte an den aneinander anliegenden Rollen 32a und 32b verformt werden und schlimmstenfalls von der definierten Ausgangsposition abweichen. Da der Draht 14 dann nicht in die vorbestimmte Ausgangsposition zurückgefahren werden kann, könnte es sogar zu Schäden an dem zu bearbeitenden Sägeblatt kommen, d.h. es würde Ausschuss produziert. Durch die Anschlaganordnung 46 wird eine unerwünschte Deformation des Schweißdrahtes 14 verhindert, da die Anschlaganordnung 46 einen vorbestimmten Sollabstand zwischen den Rollen 32a und 32b des Rollenpaars 32 festlegt. Mit anderen Worten begrenzt die Anschlaganordnung 46 die Auslenkung der Rolle 32a in Richtung der Rolle 32b aufgrund der Vorspannung durch das Ausgleichelements 42.

Figur 6 zeigt ferner, dass es sich bei der Anschlaganordnung 46 um eine Scheibe mit verschiedenen Segmenten 46a, 46b, 46c, 46d handelt, die jeweils einen bestimmten Radius repräsentieren, der mit dem gewünschten Sollabstand zwischen den Rollen 32a und 32b übereinstimmt. Mit anderen Worten kann der Sollabstand zwischen den Rollen 32a und 32b auf bestimmte Drahtdurchmesser des Schweißdrahts 14 eingestellt werden. Die Anschlaganordnung 46 stellt durch den vorbestimmten Sollabstand zwischen den Rollen 32a und 32b sicher, dass der Draht 14 immer in seine definierte Ausgangsposition zurückgefahren werden kann, unabhängig davon, ob ein Drahtende bereits über die Rollen 32a und 32b hinaus gefördert wurde. Ferner verhindert die Anschlaganordnung 46 Schäden an dem zu bearbeitenden Sägeblatt und somit teueren Ausschuss.

Die Anschlaganordnung 46 ist jedoch nicht auf diese Scheibenform mit Segmenten beschränkt, die verschiedene Radien repräsentieren. Es sind auch auswechselbare Einzelanschläge, eine Scheibe mit sich stetig ändernden Radien oder eine Stellschraube zum Einstellen der gewünschten Sollabstände denkbar.

Figur 6 zeigt zudem, dass an der Anschlaganordnung 46, d.h. der Scheibe 46, eine Skalierung angebracht ist, die jeweils den Drahtdurchmesser angibt, der mit einem der Segmente 46a, 46b, 46c, 46d eingestellt werden kann.

Figur 7 zeigt eine vergrößerte Ansicht des Ausschnitts Vb. In dieser Draufsicht erkennt man wiederum wie der Schweißdraht 14 durch die Schweißdrahtzuführhülse 20 zu der Formbackenanordnung 18 mit den Formbacken 18a und 18b zugeführt wird. In Figur 7 ist ein Bereich um den vorbestimmten Abschmelzpunkt AP schematisch dargestellt, der auf der Fläche 33 oberhalb der Öffnung 35 liegt. Diesen Abschmelzpunkt AP gewährleistet, dass das geschmolzene Stellit durch die Schwerkraft in die Öffnung 35 des von den Formbacken 18a und 18b gebildeten Hohlraum 36 eindringen kann und sich dort mit dem hier nicht gezeigten Sägezahn verbindet. Bevorzugt ist hierbei, dass der vorbestimmte Abschmelzpunkt AP mit dem Flächenmittelpunkt der der Schweißdrahtzuführhülse 20 zugewandten Fläche 33 der Formbackenanordnung 18 übereinstimmt.

Im Folgenden soll mit Bezug auf die Figuren 1 bis 7 ein Verfahren zum Stellitieren von Sägezähnen beschrieben werden. Bei einem Stellitiervorgang muss der Schweißdraht mit einer hohen Präzision - innerhalb eines Toleranzfeldes TF von 0,1 mm - einem vorbestimmten Abschmelzpunkt AP zugeführt werden. Das Einhalten dieses engen Toleranzfelds TF wird durch herstellungsbedingte Toleranzen, die die Form und den Durchmesser des Schweißdrahts 14 betreffen, sowie durch von einem Abwickelvorgang einer Bevorratungsrolle herrührenden Verformungen erschwert. Dementsprechend wird der Schweißdraht 14 durch die Richtrollenanordnung 22 mit einer vorbestimmten Deformation, insbesondere einer Krümmung, versehen und durchläuft mit dieser vorbestimmten Deformation die den Schweißdraht 14 antreibende Drahtzuführeinrichtung 12. Nach der Drahtzuführeinrichtung 12 wird der Schweißdraht 14 mit der vorbestimmten Deformation mittels der Schweißdrahtzuführhülse 20 zu dem vorbestimmten Abschmelzpunkt AP zugeführt. Durch die vorbestimmte Deformation legt sich der Schweißdraht 14 in einem Anlagebereich 38 an die Schweißdrahtzuführhülse 20 an. Der Anlagebereich 38 bildet hier eine Führung für den Schweißdraht 14, wodurch dieser exakt zu dem vorbestimmten Abschmelzpunkt AP geführt wird. Diese Anlage an dem Anlagebereich 38 ermöglicht auch die reproduzierbar hohe Präzision der Zuführung zum Abschmelzpunkt AP, da der Schweißdraht 14 an dem Anlagebereich 38 der Schweißdrahtzuführhülse 20 in Richtung des Abschmelzpunktes AP abgelenkt wird und diesen innerhalb der engen Toleranz ansteuert. Erreicht der Schweißdraht 14 den Abschmelzpunkt AP, wird durch den Schweißbrenner 16 ein vorbestimmtes Volumen abgeschmolzen. Die Stellitschmelze dringt, bedingt durch die Schwerkraft, durch die Öffnung 35 in den von der Formbackenanordnung 18a und 18b gebildeten Hohlraum 36 ein, der einer Negativform des zu stellitierenden Sägezahns entspricht. In diesem Hohlraum 36 verbindet sich das geschmolzene Stellit mit dem zu stellitierenden Sägezahn. Anschließend wird die Formbackenanordnung 18 geöffnet und der Stellitiervorgang ist abgeschlossen.

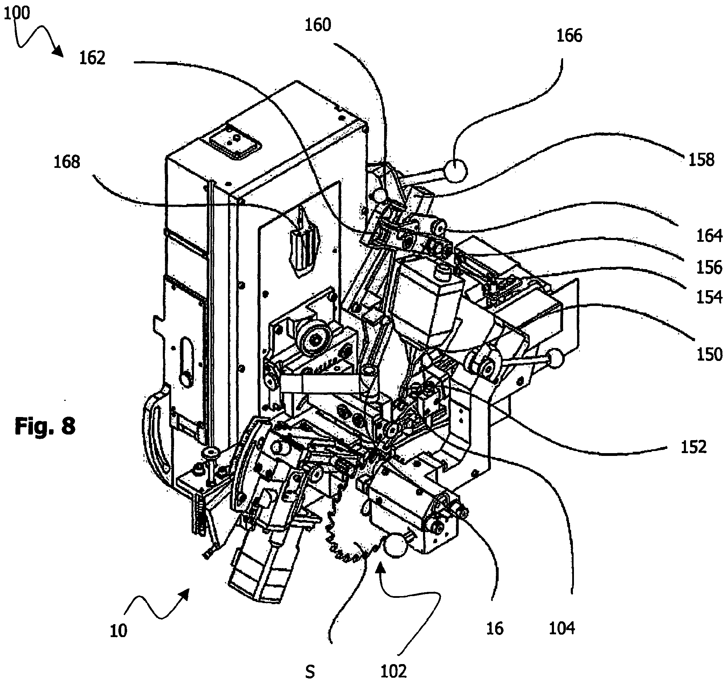

Figur 8 zeigt eine Maschine zum Bearbeiten von Sägezähnen, insbesondere dem Stellitieren und Anlassen von Sägezähnen von verschiedenartigen Sägeblättern. An der Maschine 100 ist eine Stellitiervorrichtung 10 der voranstehend beschriebenen Art angeordnet. Neben der Stellitiervorrichtung 10 weist die Maschine 100 auch eine Vorrichtung 150 zum Anlassen der stellitierten Sägezähne auf. Das Anlassen stellitierter Sägezähne wird notwendig, da durch das Stellitieren hohe Temperaturen auf das Material des Sägeblattes einwirken. Durch diese hohen Temperaturen bzw. durch das Abkühlen des Sägezahns nach dem Stellitieren können Verspannungen und Änderungen des Materialgefüges in das Material des Sägeblatts S eingebracht werden, die einen Verzug in dem Sägeblatt S und/oder einen Bruch des Sägezahns auf dem Sägeblatt S hervorrufen und dessen Funktion beeinträchtigen können.

Das Anlassen erfolgt mit einer Hochfrequenz-Anlasseinrichtung 150, wobei das erneute Zuführen von Wärme zu dem Sägezahn bzw. Sägeblatt S zu einer Gefügeveränderung in dem Material des Sägeblatts S führt, wodurch Verspannungen in dem Material abgebaut werden. Mit anderen Worten wird durch das Anlassen mit der Hochfrequenz-Anlasseinrichtung 150 eine Rekristallisation in dem Gefüge des Sägeblattes herbeigeführt.

Wie bereits erwähnt, können mit der Maschine 100 wechselweise zwei verschiedene Bearbeitungsvorgänge durchgeführt werden, nämlich das Stellitieren und das Anlassen. Das zu bearbeitende Sägeblatt S wird mit einer Aufspanneinrichtung 102 in der Maschine 100 angebracht. Um jeden einzelnen Sägezahn jeweils in die Bearbeitungsposition bringen zu können, weist die Maschine 100 zudem eine CNCgesteuerte Vorschubeinrichtung 104 auf. Mit der Vorschubeinrichtung 104 kann jeweils ein vorbestimmter Sägezahn in die Bearbeitungsposition überführt werden. In bestimmten Anwendungsfällen kann es aus prozesstechnischen Gründen erforderlich sein, bei Sägeblättern S mit verschiedenen Materialeigenschaften, die gerade stellitierten Sägezähne in einem oder mehreren weiteren Bearbeitungsdurchläufen anzulassen, wobei das Sägeblatt S in der gleichen Aufspanneinrichtung 102 verbleibt. Das Stellitieren und Anlassen erfolgt mit der gleichen Vorschubeinrichtung 104, wobei die Bearbeitungsreihenfolge der Sägezähne voreingestellt werden kann.

Zur Durchführung des Anlassens weist die Anlasseinrichtung 150 eine austauschbare Induktionsschlaufe 152 auf, die je nach Form und Größe des Sägezahns ausgetauscht werden kann. Die Anlasseinrichtung 150 ist an einer Hebelanordnung 154 angeordnet. Die Hebelanordnung 154 ist um einen Drehpunkt 156 verlagerbar. Durch Verlagern der Hebelanordnung 154 um den Drehpunkt 156 und Führen in einer hier nicht gezeigten Kurvennut kann die Anlasseinrichtung 150 eine geradlinige Bewegung in Richtung des zu bearbeitenden Sägezahns ausführen. Die Anlasseinrichtung 150 bzw. die Hebelanordnung 154 wird über einen steuerbaren Antrieb 158 in Richtung des zu bearbeitenden Sägezahns oder von diesem weg bewegt. Anstelle der Hebelanordnung 154 ist beispielsweise auch eine Stellschlittenanordnung denkbar. Die Erfindung ist daher nicht auf eine Hebelanordnung 154 beschränkt.

Die Induktionsschlaufe 152 kann über verschiedene Justiereinrichtungen bzw. Stellschrauben auf das zu bearbeitende Sägeblatt S eingestellt werden. Die Anlasseinrichtung 150 kann über die Stellschraube 160 in vertikaler Richtung und über die Stellschraube 162 in horizontaler Richtung zu dem zu bearbeitenden Sägezahn verlagert und so auf das jeweilige Sägeblatt S eingestellt werden. Ferner ist eine Einstellung der Lage der Induktionsschleife 152 quer zu einer Einspannebene des Sägeblattes durch die Stellschraube 164 möglich. Mit anderen Worten kann die Lage der Induktionsschlaufe 152 derart verändert werden, dass der zu bearbeitende Sägezahn in der Mitte zwischen den beiden Schlaufenabschnitten der Induktionsschlaufe 152 liegt. Durch die Stellschrauben 160, 162, 164 ist eine Verlagerung der Induktionsschlaufe 152 in drei Richtungen zu dem Sägeblatt S möglich. Als Alternative zu Stellschrauben 160, 162, 164 sind hier auch andere Stellglieder denkbar, wie z.B. Exzenter, da es sich um kurze Stellwege handelt.

Figur 8 zeigt die Maschine 100 in der Position, in der die Stellitiervorrichtung 10 einen ausgewählten Sägezahn stellitieren kann. Um nun vom Stellitiervorgang zu dem Anlassvorgang wechseln zu können, wird der Plasmabrenner 16 entweder manuell über einen Positionierhebel 166 oder automatisch über einen Positionierantrieb 168 von dem Sägeblatt S weg bewegt und die Anlasseinrichtung 150 durch den Antrieb 158 in Richtung des anzulassenden Sägezahns bewegt.

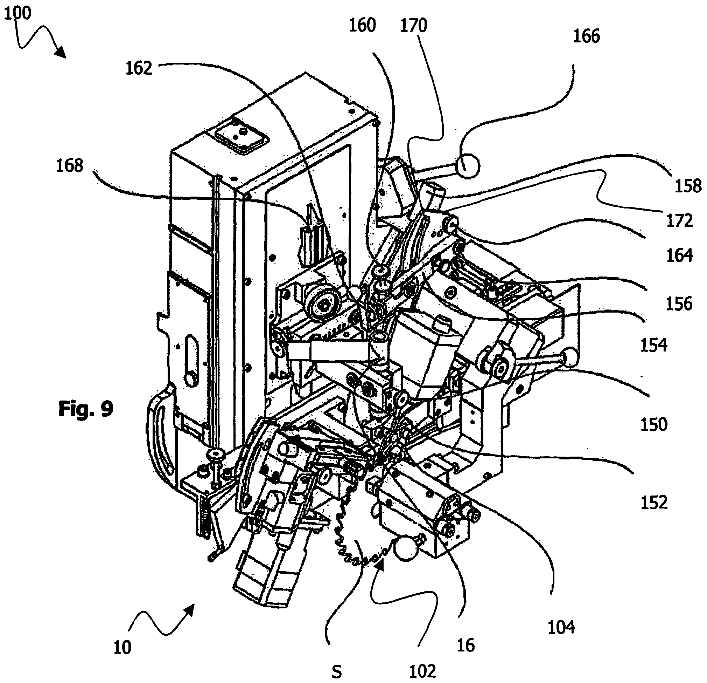

Figur 9 zeigt die Maschine 100 in der Position während des Anlassens. Wie man aus Figur 9 erkennt, wurde die Anlasseinrichtung 150 mit der Induktionsschlaufe 152 in Richtung des Sägeblatts S bzw. des zu bearbeitenden Sägezahns bewegt. Aus Figur 9 wird nun ersichtlich, dass die Hebelanordnung 154 zum Verlagern der Anlasseinrichtung 150 entlang einer Kurvennut 170 in der Halterung 172 um den Drehpunkt 156 verlagert werden kann. Dadurch wird eine annähernd geradlinige Bewegung der Induktionsschlaufe 152 in Richtung des Sägeblattes S erreicht.

Aus Figur 9 wird zudem ersichtlich, dass das Sägeblatt S in der gleichen Aufspanneinrichtung 102 verbleibt, wie beim Stellitieren. Mit anderen Worten können zum Stellitieren und Anlassen die gleiche Vorschubeinrichtung 104 und die gleiche Aufspanneinrichtung 102 verwendet werden. Es ist somit möglich mit der Maschine 100 in einem ersten Durchgang alle Sägezähne zu stellitieren und diese anschließend mit der Anlasseinrichtung 150 anzulassen. Dabei muss das Sägeblatt S nicht umgespannt und ausgerichtet werden, sondern kann in seiner Aufspanneinrichtung 102 verbleiben.

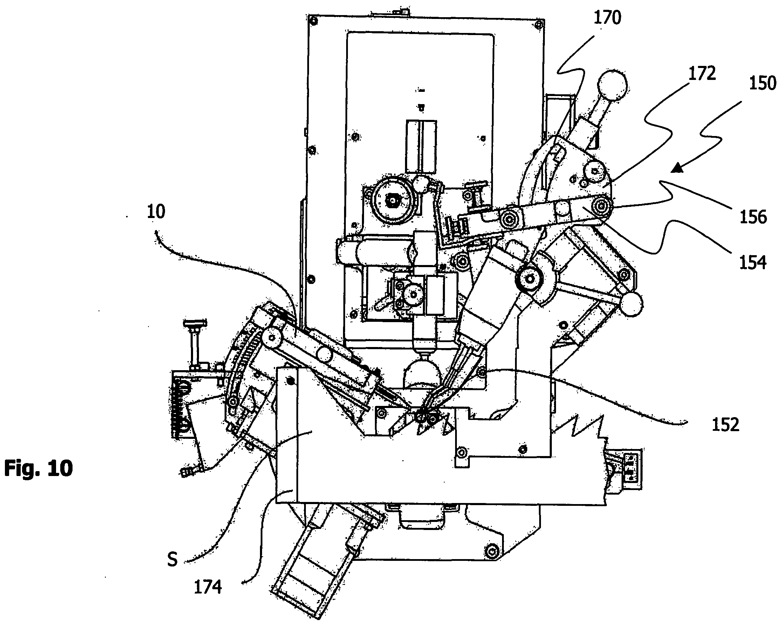

Figur 10 zeigt eine Vorderansicht der Maschine 100 mit der Stellitiereinrichtung 10 und der Anlasseinrichtung 150. Man erkennt ferner die Induktionsschlaufe 152 an der Anlassvorrichtung 150 und die um den Drehpunkt 156 verlagerbare Hebelanordnung 154. Der Hebelanordnung 154 kann entlang der Kurvennut 170 in der Halterung 172 bewegt werden.

Figur 10 stellt einen Spezialfall dar, da in diesem Fall ein Gattersägeblatt S stellitiert und angelassen werden soll. An dem Gattersägeblatt S sind hier Einhangleisten 174 vorgesehen, mit denen es in einen Gatterrahmen eingehängt werden kann. Auch ein Gattersägeblatt S kann in der Aufspanneinrichtung 102 verbleiben und mit der Vorschubeinrichtung 104 positioniert werden.

## Patentansprüche

1. Vorrichtung (10) zum Stellitieren von Sägezähnen mit
- einem Schweißbrenner (16),
- einer Drahtzuführeinrichtung (12) zum Zuführen eines Schweißdrahts (14) zu dem Schweißbrenner (16),
- einer Formbackenanordnung (18), die im geschlossenen Zustand einen Hohlraum (36) bildet,
**gekennzeichnet durch** eine Richtrollenanordnung (22) mit zumindest einer Richtrolle (22a, 22b, 22c), die zum Einstellen eines Deformationsgrads des einem vorbestimmten Abschmelzpunkt (AP) zuzuführenden Schweißdrahtes (14) in vertikaler Richtung verlagerbar ist, wobei die Richtrollenanordnung (22) in Drahtzuführrichtung (DR) betrachtet vor der Drahtzuführeinrichtung (12) angeordnet ist.

2. Vorrichtung (10) nach Anspruch 1, **dadurch gekennzeichnet, dass** der Schweißdraht (14) mit einer vorbestimmten Deformation mittels einer Schweißdrahtzuführhülse (20) dem vorbestimmten Abschmelzpunkt (AP) zuführbar ist.

3. Vorrichtung (10) nach einem der Ansprüche 1 oder 2, **dadurch gekennzeichnet, dass** die Drahtzuführeinrichtung (12) relativ zu dem vorbestimmten Abschmelzpunkt (AP) verlagerbar ist.

4. Vorrichtung (10) nach Anspruch 3, **dadurch gekennzeichnet, dass** die Drahtzuführeinrichtung (12) in vertikaler und horizontaler Richtung relativ zu dem Abschmelzpunkt (AP) verlagerbar ist.

5. Vorrichtung (10) nach einem der vorangehenden Ansprüche, **dadurch gekennzeichnet, dass** die Formbackenanordnung (18) im geschlossenen Zustand den zu stellitierenden Sägezahn umschließt und an einer dem Schweißbrenner (16) zugewandten Fläche (32) eine Öffnung (35) bildet, durch die das abgeschmolzene Material in den Hohlraum (36) in der Formbackenanordnung (18) einbringbar ist.

6. Vorrichtung (10) nach einem der vorangehenden Ansprüche, **dadurch gekennzeichnet, dass** der vorbestimmte Abschmelzpunkt (AP) der Flächenmittelpunkt der dem Schweißbrenner (16) zugewandten Fläche (32) der geschlossenen Formbackenanordnung (18) ist.

7. Vorrichtung (10) nach einem der vorangehenden Ansprüche, **dadurch gekennzeichnet, dass** die Geschwindigkeit des Vorschubs des Schweißdrahtes (14) durch die Drahtzuführeinrichtung (12) steuerbar ist.

8. Vorrichtung (10) nach einem der vorangehenden Ansprüche, **dadurch gekennzeichnet, dass** die Drahtzuführeinrichtung (12) zumindest ein gegenüberliegendes Rollenpaar (32, 34) aufweist, durch das der Schweißdraht (14) hindurch führbar ist.

9. Verfahren zum Stellitieren von Sägezähnen mit einer Vorrichtung (10) nach einem der Ansprüche 1 bis 8, wobei der Schweißdraht (14) durch eine Richtrollenanordnung (22) vorbestimmt deformiert wird und mit der vorbestimmten Deformation mittels einer Drahtzuführeinrichtung (12) und einer Schweißdrahtzuführhülse (12) einem vorbestimmten Abschmelzpunkt (AP) zugeführt wird, und wobei der Schweißdraht (16) an dem vorbestimmten Abschmelzpunkt (AP) mittels des Schweißbrenners (16) abgeschmolzen wird und die Schmelze durch eine Öffnung (35) an der dem Schweißbrenner (16) zugewandten Fläche (32) in einen von der Formbackenanordnung (18) im geschlossenen Zustand gebildeten Hohlraum (36) eindringen kann.

10. Maschine (100) zur Bearbeitung von Sägeblättern mit einer Vorrichtung (10) nach einem der Ansprüche 1 bis 8.

## Claims

1. A device (10) for stelliting saw teeth, comprising:
- a welding torch (16),
- a wire feeding apparatus (12) for feeding a welding wire (14) to the welding torch (16),
- a moulding plate arrangement (18) which forms a hollow space (36) in the closed condition,
**characterised by** a straightening roll arrangement (22) with at least one straightening roll (22a, 22b, 22c) which is displaceable in the vertical direction for adjusting a degree of deformation of the welding wire (14) to be fed to a predetermined melt-off point (AP), wherein the straightening roll arrangement (22) when viewed in the wire feed direction (DR) is arranged upstream of the wire feeding apparatus (12).

2. The device (10) according to Claim 1,
**characterised in that** the welding wire (14) may be fed with a predetermined deformation by means of a welding wire feed sleeve (20) to the predetermined melt-off point (AP).

3. The device (10) according to one of Claims 1 or 2,
**characterised in that** the wire feeding apparatus (12) is displaceable relative to the predetermined melt-off point (AP).

4. The device (10) according to Claim 3,
**characterised in that** the wire feeding apparatus (12) is displaceable in the vertical and the horizontal directions relative to the predetermined melt-off point (AP).

5. The device (10) according to one of the previous claims,
**characterised in that** the moulding plate arrangement (18) surrounds the saw tooth to be stellited in the closed condition and forms an opening (35) in a surface (32) facing the welding torch (16), through which the melted-off material may be introduced into the hollow space (36) in the moulding plate arrangement (18).

6. The device (10) according to one of the previous claims,
**characterised in that** the predetermined melt-off point (AP) is the area centroid of the surface (32) of the closed moulding plate arrangement (18), facing the welding torch (16).

7. The device (10) according to one of the previous claims,
**characterised in that** the feed rate of the welding wire (14) may be controlled by the wire feeding apparatus (12).

8. The device (10) according to one of the previous claims,
**characterised in that** the wire feeding apparatus (12) comprises at least one pair of opposite rollers (32, 34) through which the welding wire (14) may be guided.

9. A method for stelliting saw teeth by means of a device (10) according to one of Claims 1 to 8,
wherein the welding wire (14) is deformed in a predetermined manner by means of a straightening roll arrangement (22) and, with the predetermined deformation, is fed to a predetermined melt-off point (AP) by means of a wire feeding apparatus (12) and a welding wire feed sleeve (20), and wherein the welding wire (14) is melted-off at the predetermined melt-off point (AP) by means of the welding torch (16) so that the molten metal may penetrate into a hollow space (36) which is formed in the closed condition of the moulding plate arrangement (18).

10. A machine (100) for processing of saw blades by means of a device (10) according to one of Claims 1 to 8.

## Revendications

1. Dispositif (10) de stellitage de dents de scie, comprenant
- un chalumeau de soudage (16),
- un dispositif d'amenée de fil (12) pour amener un fil de soudage (14) au chalumeau de soudage (16),
- un ensemble de mâchoires de moulage (18) qui forme une cavité (36) à l'état fermé,
**caractérisé par** un ensemble de rouleaux à dresser (22) comprenant au moins un rouleau à dresser (22a, 22b, 22c) qui est déplaçable en direction verticale pour régler un degré de déformation du fil de soudage (14) à amener à un point de fusion (AP) prédéterminé, dans lequel l'ensemble de rouleaux à dresser (22) est disposé en amont du dispositif d'amenée de fil (12) vu dans la direction d'amenée de fil (DR).

2. Dispositif (10) selon la revendication 1,
**caractérisé en ce que** le fil de soudage (14) peut être amené au point de fusion (AP) prédéterminé avec une déformation prédéterminée au moyen d'une douille d'amenée de fil de soudage (20).

3. Dispositif (10) selon l'une des revendications 1 ou 2,
**caractérisé en ce que** le dispositif d'amenée de fil (12) est déplaçable par rapport au point de fusion (AP) prédéterminé.

4. Dispositif (10) selon la revendication 3,
**caractérisé en ce que** le dispositif d'amenée de fil (12) est déplaçable en direction verticale et horizontale par rapport au point de fusion (AP).

5. Dispositif (10) selon l'une des revendications précédentes,
**caractérisé en ce que** l'ensemble de mâchoires de moulage (18) entoure, à l'état fermé, la dent de scie à stelliter et forme, sur une surface (32) tournée vers le chalumeau de soudage (16), une ouverture (35) à travers laquelle le matériau en fusion peut être introduit dans la cavité (36) de l'ensemble de mâchoires de moulage (18).

6. Dispositif (10) selon l'une des revendications précédentes,
**caractérisé en ce que** le point de fusion (AP) prédéterminé est le centre de surface de la surface (32) tournée vers le chalumeau de soudage (16) de l'ensemble de mâchoires de moulage (18) fermé.

7. Dispositif (10) selon l'une des revendications précédentes,
**caractérisé en ce que** la vitesse d'avance du fil de soudage (14) peut être commandée par le dispositif d'amenée de fil (12).

8. Dispositif (10) selon l'une des revendications précédentes,
**caractérisé en ce que** le dispositif d'amenée de fil (12) comprend au moins une paire de rouleaux (32, 34) opposés à travers laquelle le fil de soudage (14) peut être guidé.

9. Procédé de stellitage de dents de scie comprend un dispositif (10) selon l'une des revendications 1 à 8,
dans lequel le fil de soudage (14) est déformé d'une manière prédéterminée par un ensemble de rouleaux à dresser (22) et amené avec la déformation prédéterminée à un point de fusion (AP) prédéterminé au moyen d'un dispositif d'amenée de fil (12) et d'une douille d'amenée de fil de soudage (12), et dans lequel le fil de soudage (16) est fondu au moyen du chalumeau de soudage (16) au point de fusion (AP) prédéterminé et le matériau fondu peut pénétrer à travers une ouverture (35) sur la surface (32) tournée vers le chalumeau de soudage (16) dans une cavité (36) formée par l'ensemble de mâchoires de moulage (18) à l'état fermé.

10. Machine (100) de traitement de dents de scie équipée d'un dispositif (10) selon l'une des revendications 1 à 8.
